# EUROPEAN PATENT SPECIFICATION

(11) **EP 1 907 519 B1**
(45) Date of publication and mention of the grant of the patent: **04.08.2010**
(21) Application number: 06769422.4
(22) Date of filing: 27.06.2006
(51) Int. Cl.: A23D 9/06, A23L 3/3463, C11B 5/00

(54) **USE OF FULLERENE C60 AS A STABILISER FOR OILS COMPRISING PHOSPHOGLYCERIDES**
VERWENDUNG VON FULLEREN-C60 ALS STABILISATOR FÜR ÖLE ENTHALTEND PHOSPHOGLYCERIDE
UTILISATION DU FULLERENE C60 COMME STABILISATEUR D'HUILES COMPRENANT DES PHOSPHOGLYCERIDES

(30) Priority: 27.06.2005 NO 20053129
(43) Date of publication of application: 09.04.2008
(73) Proprietor: UNI Pharma Holding AS, 8178 Halsa (NO)
(72) Inventor: GRIBANOV, Alexander, St. Petersburg, 199004 (RU); ZUEV, Vjatseslav, St. Petersburg, 199004 (RU)
(74) Representative: Norris, Timothy Sweyn
(86) International application number: PCT/NO2006/000246
(87) International publication number: WO 2007/001188

(56) References cited:
- WO-A1-93/10207
- WO-A1-2005/105214
- GB-A- 2 064 297
- US-A- 4 915 876
- DATABASE WPI Week 199816 Thomson Scientific, London, GB; AN 1998-175299 XP003008882 -& JP 10 036877 A (NEW AQUA GIJUTSU KENKYUSHO KK) 10 February 1998 (1998-02-10)
- WANG I C ET AL: "C60 and Water-Soluble Fullerene Derivatives as Antioxidants Against Radical-Initiated Lipid Peroxidation" JOURNAL OF MEDICINAL CHEMISTRY, AMERICAN CHEMICAL SOCIETY, WASHINGTON, US, vol. 42, no. 22, 1 January 1999 (1999-01-01), pages 4614-4620, XP002979338 ISSN: 0022-2623
- HUI, YH (ED.): "Bailey's industrial oil and fat products. Volume 2: edible oil and fat products: oils and oil seeds, pp. 498-502" 1996, JOHN WILEY AND SONS INC. , NEW YORK, USA , XP002543522 * the whole document *
- DATABASE WPI Week 199816, Derwent Publications Ltd., London, GB; Class D23, AN 1998-175299, XP003008882 & JP 10 036 877 A (NEW AQUA GIJUTSU KENKYUSHO KK) 10 February 1998
- DATABASE WPI Week 200575, Derwent Publications Ltd., London, GB; Class H07, AN 2005-730957, XP003008883 & JP 2005 298735 A (FRONTIER CARBON KK) 27 October 2005

## Description

The present invention relates to a stabilized oil, methods for the production of said oil, and use thereof. Thus the invention comprises use of fullerene (C60) for stabilizing oils, seeing as fullerene appears to be a very effective antioxidant in oils.

### Introduction

The applicant of the present application, UNI Pharma Holding AS, developed the Omega-3 products *UNIC Omega-3* and *AniMega* in cooperation with SINTEF Fisheries and Aquaculture, Trondheim, Norway, in the time period of 1999-2000. At that point in time shelf life tests showed the herb rosemary to be the most effective antioxidant (stabilizer) for salmon/fish oil.

The research institute of St. Petersburg, Russia, has since 2001 performed extensive research for UNI Pharma Holding AS. Through 10 years of researching fullerene the institute has carried out several shelf life tests which establish that fullerene molecule C60 is a very good antioxidant.

### Background

Twenty years ago independent researchers in the USA (Rais University in Huston) and England (Sussecs University) a new mesomorph form of carbon, which was named *fullerene*.

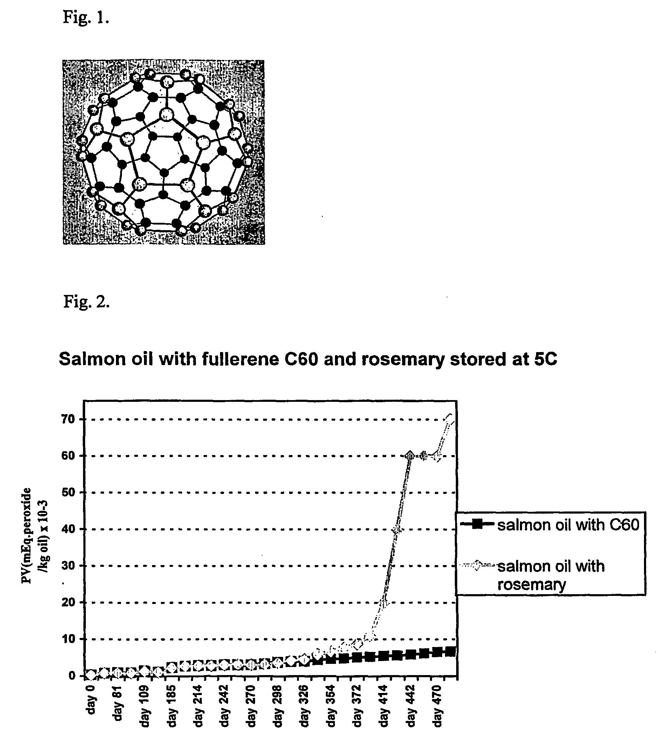

It was earlier thought that pure carbon (molecules comprising carbon only) could only be found in two allotropic forms: graphite and diamond. The structure of the new form is very special - the fullerene molecule has 60 carbon atoms, and looks like a soccer ball. Therefore there is also a different name for it in English- *buckyball*. Please see figure 1. for a schematic representation of the chemical structure of fullerene.

Through the years research on the properties of the fullerene molecule was intensified, and from the 90-ies several thousand printed and electronic pieces of information were published. In 1996 the Australian researcher Peter C. Docherty and the Swiss researcher Rolf M. Zinkernagel were rewarded the Nobel Prize in chemistry for their research on fullerene.

In the mid 90-ies articles and patent literature regarding the biological activity of the fullerene molecule started to appear. There were suggestions of using this molecule or its complexes (as an additive to other compounds) in medicines, and for other purposes in connection with the functions of the human body.

By year 2000 it was established that the fullerene molecule in complex with a high molecular weight carrier has potential on at least two fronts: as an anti-viral and antiinflammatory agent. Some of the publications showed that fullerene may bind free oxygen, i.e. that fullerene has the ability to accept free oxygen radicals.

DATABASE WPI Week 199816 Thomson Scientific, London, GB; AN 1998-175299 -& JP 10 036877 A discloses the stabilisation of cooking oils with a composition comprising fullerene type carbon, phenolic derivatives and a smoke condensate. It prevents the oxidative degradation of the edible oils and keeps the taste of fried foods.

### Summary of the invention

The stabilized oil according to the present invention is thus characterized by that it contains fullerene (C60) and phosphoglycerides.

The method according to the present invention is thus characterised by that fullerene (C60) is added to the oil as an antioxidant.

Us according to the present invention is thus characterized by use of the stabilized oil as a nutritional additive.

Further variations of the invention are given in the dependent claims.

### Detailed description of the invention

The present invention will now be described in detail with reference to the following figures:
Figure 1. Structural formula of fullerene C₆₀
Figure 2. Shelf life tests for salmon oil stabilised with fullerene or rosemary. The results are given as the change in the oxidation level of fatty acids in the oil. The antioxidants rosemary and fullerene were present at 0.1 % and 0.001 % by weight, respectively.

Based in numerous research; physics and chemistry laboratory experiments and the study of scientific and patent literature - the inventors have found a way that makes it possible to add up to 0.05 % by weight of fullerene in salmon oil with no change in the main parameters of the oil.

Salmon oil contains complicated mixed materials made of different components, where the main component is lipids. Salmon oil lipids may be divided into the following main groups: triglycerides, phospholipids, alkoxy diglycerides, vaxes, sphingolipids or cerebrosides, neutral plasmogens, carbohydrates, styrenes and styrides, vitamins and carotenoids.

The composition of the oil content varies, and is dependent on which parts of the fish it is produced from, the fishing season, the fishing area, and so forth. For example, the oil from fish flesh from Atlantic salmon contain 83 % triglycerides, 5.5 % phospholipids, and 3.7-5.3 % other lipids.

The premise was that adding it, in a soluble form, to the salmon oil, could employ the useful properties of fullerene. Dissolving fullerene in the oil is ensured by the interactions between fullerene and lipids in the salmon oil, which are hydrofobhydrophile hybrids. Dissolving fullerene with lipids makes it possible to dissolve it in oil and make fullerene-containing compositions based on salmon oil with the necessary fullerene concentration. Additionally, this ensures the digestibility of fullerene in the organism, and its uptake into the blood of the intestine.

From scientific publications it is known that fullerene is easily dissolved in monoethanol amide and derivatives thereof, and form stabile solutions (J.Saut Afrika Chem.1996).

Our new method for dissolving fullerene in salmon oil is related to specific π-π interactions of fullerene with phosphoglycerides - lecithines. The general formula of these compounds are:

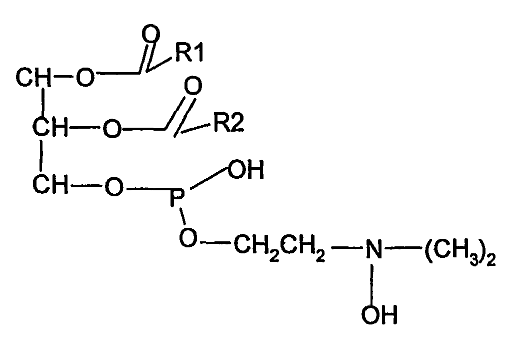

Where R1 And R2 are freagments of fatty acids. These bonds are ether of amine ethyl alchohol - holin (monoethanolamine).

HO(CH₂CH₂)-N-(CH₃)₂

In this manner the interaction between phospholipids and fullerene, or between sphingophospholipids and fullerene, is achieved: 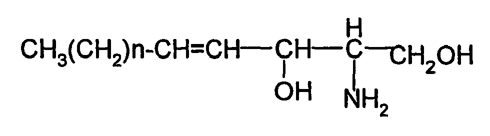 where n=12-18

This ensures the dissolution of fullerene in salmon oil. Dissolution occurs due to the interaction of free n-electron pairs from nitrogen and/or phosphorus with π-electrons of fullerene. The formed complexes (with coordination number 6) are stabile.

Analytical research using modern spectrometry methods has convincingly shown the presence of fullerene in salmon oil. This is confirmed by the results of the UF-test: the presence of an absorption peak for fullerene C60 at 328 nm.

Additional research by means of spectroscopic JMR ¹³C (Equipment: AM-500 "User") confirm the existence of fullerene in the research material, and also confirm the hypothesised mechanism of fullerene complex formation in salmon oil.

After interacting with the lipids of the oil, the chemical mobility of the fullerene is changed to a slower relaxation. This leads to removal of the fullerene C60 signal (146 m.d) from the spectra. At the same time new signals appear in the phospholipids spectra as a result of the interaction with fullerene. They point to the connection points between fullerene C60 and the lipids (60-64 m.d. - fragments of moroethanolamines and phosphoric acids).

When bound by fragments to phospholipids, the stabile state of fullerene is ensured, resulting in a long time period where fullerene exists in salmon oil in an "active" state.

Concentrates made in this manner can be added to a product to achieve a desired concentration of fullerene as an antioxidant in a nutritional additive.

One object of the invention relates to use in production of nutritional and pharmaceutical products, and a new additive for storing a high quality product of salmon oil/fish oil over a long time period. A different object of the invention relates to a new method of increasing the favourable properties of a product, based on the inclusion of a nano-structured carbon molecule, namely fullerene, at microscopic dosages, in the product.

Even though salmon oil is used in the following experiments, there are no reasons why other oils cannot be stabilized in the same manner with fullerene. Fullerene may thus be used generally as an antioxidant to produce stabilized oils comprising phosphoglycerides.

The addition of fullerene does not change the properties of the product, is not toxic, and increase the keeping quality. Oils stabilized with fullerene are thus well suited for addition in nutritional products, for example in fish oil used as a nutritional supplement, such as capsules filled with fish oil for supplementation of omega fatty acids.

*In vitro* experiments with concentrations of fullerene of up to 100 mM in water has shown that fullerene is not cytotoxic or hepatoxic, and does not inhibit cellular respiration or inhibition of membrane catalytic activity. It was also shown that the antioxidant activity of fullerene is greater than ionol, vitamin E, and beta-carotene, that fullerene stabilizes cellular membranes and improve their stability during unfavorable conditions, and have no bearing on blood fibrillation.

Further, in vivo experiments with dosages of fullerene of up to 25 mg/kg (0,0025 % by weight) in a aqueous solution showed that fullerene is not toxic, immunogenic, or an allergen.

It is thus safe to use fullerene for stabilizing oil in concentrations of up to 0.05 % by weight. Preferably concentrations of up to 0.001 % by weight are employed.

### Example 1: production of a fullerene concentrate in salmon oil

5 g fullerene powder was added to one litre salmon oil and stirred at ambient temperature (20 degrees Celsius) for 20 hours. The suspension was then exposed to ultrasound hashing by an ultra sound frequency of 10 KHz for 5 minutes. The suspension was then stirred for another 5 hours. The entire procedure was then repeated twice, and the suspension filtered through a double layer of Whatman filter paper nr. 595 without the application of any additional pressure. The obtained concentrate had a violet colour and contained 1 g fullerene per 1 litre of salmon fat (0.1 % by weight of fullerene, about .0005 % by weight of all impurities). An estimate of the fullerene concentration may be performed easily by spectroscopic analysis at a wavelength of 335 nm by comparison with a standard solution of fullerene in xylene.

The concentrate can be utilized by mixing it with oil until the desired level on fullerene is achieved.

### Example 2: Comparative analysis of fullerene (C60) and Rosemary as antioxidants

Purpose of the experiment: to perform parallel tests to ascertain the effects of fullerene C60 and rosemary as antioxidants in salmon oil, and to provide recommendations as to the choice of the antioxidant of better quality.

Rosemary is one of the most well known antioxidants, especially for long-term storage. In the experiment the keeping time was doubled from 300 to 600 days by fish oil stabilized with fullerene when compared to rosemary.

The Russian Scientific Academy, an institute in St. Petersburg, Russia, obtained the salmon oil from the producer Vikholmen Bioprocess AS, Vikholmen, Norway. Fullerene was bought from the research institute in Karelia, Russia. The extract of rosemary (Herbalox) was obtained by the research institute in St. Petersburg, Russia.

Research on storage of salmon oil was carried out at temperatures of 25°C and 5°C during the time period from June 11, 2003 to November 10, 2004 (17 months). The quality of the rosemary and fullerene C60 as antioxidants in salmon oil was studied in parallel during the entire duration of the experiment.

The concentration of the two chosen antioxidants used in the experiment were obtained by an addition of 0.1 % rosemary (the same concentration used in the products *UNIC Omega-3* and *AniMega*) and 0.001 % fullerene C60.

The results of the tests are shown below in Table 1. Standard methods of defining the degree of oxidation in fatty acids were used during selected time periods during the storage test. Figure 2. presents data from a storage temperature of 5 °C.

As shown in Table 1, the testing revealed fullerene C60 as a more effective additive than rosemary at a temperature of 5C. Once every second week the spectral (H 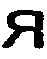 M3) characteristics of the research materials were monitored. No notable difference in the acceptance of non-saturated fatty acids (5.0-5.5 m.d. and 4.0-4.5 m.d.) were seen. This method showed the salmon oil to be the same in all the tests.

**Table 1.**

| | | **fullerene C60** | **fullerene C60** | **rosemary** | **rosemary** |
|---|---|---|---|---|---|
| Date | Days | Temperature of 25C | Temperature of 5C | Temperature of 25C | Temperature of 5C |
| 11.06 | 0 | 0.00036 | 0.00036 | 0.00036 | 0.00036 |
| 25.06 | 14 | 0.00076 | 0.00083 | 0.00076 | 0.00083 |
| 8.09 | 81 | 0.0020 | 0.0010 | 0.0020 | 0.0010 |
| 22.09 | 95 | 0.0031 | 0.00095 | 0.0031 | 0.00095 |
| 6.10 | 109 | 0.0090 | 0.0014 | 0.0090 | 0.0014 |
| 20.10 | 123 | 0.0015 | 0.0012 | 0.0015 | 0.0012 |
| 21.12 | 185 | 0.012 | 0.0023 | 0.012 | 0.0023 |
| 05.01 | 200 | 0.015 | 0.0027 | 0.015 | 0.0027 |
| 19.01 | 214 | 0.022 | 0.0028 | 0.022 | 0.0028 |
| 02.02 | 228 | 0.034 | 0.0028 | 0.034 | 0.0028 |
| 16.02 | 242 | 0.037 | 0.0030 | 0.037 | 0.0030 |
| 2.03 | 256 | 0.038 | 0.0030 | 0.040 | 0.0031 |
| 16.03 | 270 | 0.040 | 0.0031 | 0.041 | 0.0031 |
| 30.03 | 284 | 0.041 | 0.0033 | 0.043 | 0.0031 |
| 13.04 | 298 | 0.044 | 0.0037 | 0.046 | 0.0036 |
| 27.04 | 312 | 0.047 | 0.0039 | 0.054 | 0.0042 |
| 11.05 | 326 | 0.049 | 0.0040 | 0.060 | 0.0045 |
| 25.05 | 340 | 0.054 | 0.0043 | 0.076 | 0.0059 |
| 8.06 | 354 | 0.059 | 0.0046 | 0.087 | 0.0067 |
| 22.06 | 368 | 0.063 | 0.0048 | 0.11 | 0.0078 |
| 06.07 | 372 | 0.066 | 0.0050 | 0.14 | 0.0086 |
| 20.07 | 386 | 0.068 | 0.0052 | 0.22 | 0.011 |
| 15.08 | 414 | 0.070 | 0.0054 | 0.35 | 0.023 |
| 29.08 | 428 | 0.072 | 0.0055 | 0.45 | 0.042 |
| 12.09 | 442 | 0.080 | 0.0058 | 0.60 | 0.061 |
| 26.09 | 456 | 0.085 | 0.0061 | 0.56 | 0.062 |
| 10.10 | 470 | 0.088 | 0.0065 | 0.66 | 0.065 |
| 24.10 | 484 | 0.089 | 0.0066 | 0.72 | 0.072 |

### Example 3: Organoleptic characteristics of salmon oil stabilized by fullerene.

With basis in salmon oil as a nutritional supplement, organoleptic characteristics (determination of the quality of the oil by taste and smell) are also of importance. Standardized methods for organoleptic testing were utilized: one drop of salmon oil was placed on the arm and applied in a thin layer by means of a piece of glass. After one minute the quality of the oil could be determined by taste and smell. Five different individuals were tested, once per week, to obtain independent results. The results of these tests were that after 17 months the salmon oil containing fullerene C60 as an additive still displays good user applicability. Both smell and taste was satisfactory at this point in time, and better for fullerene, witch kept well for 600 days, than for rosemary, witch only kept for 300 days.

## Claims

1. Stabilized oil, **characterized by** that it comprises fullerene (C60) and phosphoglycerides.

2. Stabilized oil in accordance with claim 1, **characterized by** that said oil comprise up to 0.05 % by weight fullerene, preferably up to 0.001 % by weight fullerene.

3. Stabilized oil in accordance with one or more of claims 1- 2, **characterized by** that said oil comprise fish oil.

4. Stabilized oil in accordance with claim 3, **characterized by** that said oil comprises salmon oil.

5. Stabilized oil in accordance with one or more of claims 1-4, **characterized by** that said oil is suitable as a nutriment.

6. Method of stabilizing oil comprising phosphoglycerides, **characterized by** addition of fullerene (C60) as an antioxidant to said oil.

7. Method in accordance with claim 6, **characterized by** the addition of up to 0.05 % by weight of fullerene, preferably up to 0.001 % by weight of fullerene, to said oil.

8. Method in accordance with claim 6 or 7, **characterized by** that a concentrate comprising fullerene (C60) and phosphoglycerides is first produced, and then said concentrate is mixed with said oil to stabilize it.

9. Use of a stabilized oil in accordance with one or more of claims 1-5 as a nutritional supplement.

10. Use of a stabilized oil in accordance with one or more of claims 1-5 or a method in accordance with any one of claims 6-8 in order to improve the taste and smell of said oil when stored.

## Patentansprüche

1. Stabilisiertes Öl, **gekennzeichnet dadurch, dass** es Fullerene (C60) und Phosphoglyceride enthält.

2. Stabilisiertes Öl gemäß Anspruch 1, **gekennzeichnet dadurch, dass** das Öl bis zu 0,05 Gewichtsprozent Fullerene, bevorzugt bis zu 0,001 Gewichtsprozent Fullerene, enthält.

3. Stabilisiertes Öl gemäß einem oder mehreren der Ansprüche 1 - 2, **gekennzeichnet dadurch, dass** das Öl Fischöl umfasst.

4. Stabilisiertes Öl gemäß Anspruch 3, **gekennzeichnet dadurch, dass** das Öl Lachsöl umfasst.

5. Stabilisiertes Öl gemäß einem oder mehreren der Ansprüche 1 - 4, **gekennzeichnet dadurch, dass** das Öl als Nahrungsmittel geeignet ist.

6. Verfahren zur Stabilisierung von Phosphoglyceride enthaltendem Öl, **gekennzeichnet dadurch, dass** dem Öl Fullerene (C60) als Antioxidans zugegeben werden.

7. Verfahren gemäß Anspruch 6, **gekennzeichnet dadurch, dass** dem Öl bis zu 0,05 Gewichtsprozent Fullerene, bevorzugt bis zu 0,001 Gewichtsprozent Fullerene, zugegeben werden.

8. Verfahren gemäß Anspruch 6 oder 7, **gekennzeichnet dadurch, dass** zuerst ein Konzentrat, das Fullerene (C60) und Phosphoglyceride enthält, produziert wird und dann das Konzentrat mit dem Öl gemischt wird, um dieses zu stabilisieren.

9. Verwendung von stabilisiertem Öl gemäß einem oder mehreren der Ansprüche 1 - 5 als Nahrungsergänzungsmittel.

10. Verwendung von stabilisiertem Öl gemäß einem oder mehreren der Ansprüche 1 - 5 oder einem Verfahren gemäß irgendeinem der Ansprüche 6 - 8, um den Geschmack und den Geruch des Öls bei der Lagerung zu verbessern.

## Revendications

1. Huile stabilisée, **caractérisée en ce qu'**elle comprend un fullerène (C60) et des phosphoglycérides.

2. Huile stabilisée selon la revendication 1, **caractérisée en ce que** la dite huile comprend jusqu'à 0,05% en poids de fullerène, de préférence jusqu'à 0,001% en poids de fullerène.

3. Huile stabilisée selon la revendication 1 ou 2, **caractérisée en ce que** la dite huile comprend de l'huile de poisson.

4. Huile stabilisée selon la revendication 3, **caractérisée en ce que** la dite huile comprend de l'huile de saumon.

5. Huile stabilisée selon une ou plusieurs des revendications 1 à 4, **caractérisée en ce que** la dite huile est utilisable comme aliment.

6. Méthode de stabilisation d'une huile comprenant des phosphoglycérides, **caractérisée par** l'ajout du fullerène (C60) comme anti-oxydant à la dite huile.

7. Méthode selon la revendication 6, **caractérisée par** l'ajout de jusqu'à 0,05% en poids de fullerène, de préférence jusqu'à 0,001% en poids de fulleréne, à la dite huile.

8. Méthode selon la revendication 6 ou 7, **caractérisée en ce qu'**un concentré comprenant un fullerène (C60) et des phosphoglycérides est d'abord produit et ensuite le dit concentré est mélangé avec la dite huile pour la stabiliser.

9. Utilisation d'une huile stabilisée selon l'une ou plusieurs des revendications 1 à 5, comme complément alimentaire.

10. Utilisation d'une huile stabilisée selon l'une ou plusieurs des revendications 1 à 5 ou une méthode en accord avec l'une quelconque des revendications 6 à 8 afin d'améliorer le goût et l'odeur de la dite huile pendant le stockage.
